# EUROPÄISCHE PATENTSCHRIFT

(11) **EP 2 928 581 B1**
(45) Veröffentlichungstag und Bekanntmachung des Hinweises auf die Patenterteilung: **19.10.2016**
(21) Anmeldenummer: 13798271.6
(22) Anmeldetag: 13.11.2013
(51) Int. Cl.: B01D 53/14, B01D 53/62

(54) **VERFAHREN ZUR ABSORPTION VON CO2 AUS EINER GASMISCHUNG MIT WÄSSERIGER LÖSUNG EINES DIAMINS**
PROCESS FOR ABSORPTION OF CO2 FROM A GAS MIXTURE USING AN AQUEOUS SOLUTION OF A DIAMINE
PROCÉDÉ POUR L'ABSORPTION DE CO2 D'UN MÉLANGE DE GAZ À L'AIDE D'UNE SOLUTION AQUEUSE D'UNE DIAMINE

(30) Priorität: 04.12.2012 DE 102012222157
(43) Veröffentlichungstag der Anmeldung: 14.10.2015
(73) Patentinhaber: Evonik Degussa GmbH, 45128 Essen (DE)
(72) Erfinder: SCHRAVEN, Alexander, 47661 Issum (DE); NIEMEYER, Jochen, 45128 Essen (DE); NEUMANN, Manfred, 45770 Marl (DE); RINKER, Stefanie, 46284 Dorsten (DE); SCHNEIDER, Rolf, 63584 Gründau-Rothenbergen (DE); ROLKER, Jörn, 63755 Alzenau (DE)
(86) Internationale Anmeldenummer: PCT/EP2013/073670
(87) Internationale Veröffentlichungsnummer: WO 2014/086560

(56) Entgegenhaltungen:
- EP-A1- 0 080 817
- WO-A1-2005/087349
- WO-A1-2011/082809
- US-A- 4 217 237
- US-A1- 2007 286 783

## Beschreibung

Die Erfindung betrifft ein Verfahren zur Absorption von CO₂ aus einer Gasmischung.

In zahlreichen industriellen und chemischen Prozessen treten Gasströme auf, die einen unerwünschten Gehalt von CO₂ aufweisen, dessen Gehalt für die weitere Verarbeitung, für den Transport oder für eine Vermeidung von CO₂-Emissionen verringert werden muss.

Im industriellen Maßstab werden zur Absorption von CO₂ aus einer Gasmischung üblicherweise wässrige Lösungen von Alkanolaminen als Absorptionsmedium eingesetzt. Das beladene Absorptionsmedium wird durch Erwärmen, Entspannen auf einen niedrigeren Druck oder Strippen regeneriert, wobei das Kohlendioxid desorbiert wird. Nach dem Regenerationsprozess kann das Absorptionsmedium wieder verwendet werden. Diese Verfahren sind zum Beispiel in Rolker, J.; Arlt, W.; "Abtrennung von Kohlendioxid aus Rauchgasen mittels Absorption" in Chemie Ingenieur Technik 2006, 78, Seiten 416 bis 424 sowie in Kohl, A. L.; Nielsen, R. B., "Gas Purification", 5. Aufl., Gulf Publishing, Houston 1997 beschrieben.

Diese Verfahren haben jedoch den Nachteil, dass zur Abtrennung von CO₂ durch Absorption und nachfolgende Desorption relativ viel Energie benötigt wird und dass die massenbezogene CO₂-Kapazität des Absorptionsmediums gering ist.

Als Alternativen zu Alkanolaminen wurden im Stand der Technik Diamine, Oligoamine und Polyamine vorgeschlagen.

WO 2004/082809 beschreibt eine Absorption von CO₂ aus Gasströmen mit konzentrierten wässrigen Lösungen von Diaminen der Formel (R¹)₂N(CR²R³)ₙN(R¹)₂ wobei R¹ ein C₁-C₄-Alkylrest und R², R³ unabhängig voneinander Wasserstoff oder ein C₁-C₄-Alkylrest sein können. Für n = 3 sind explizit die Diamine N,N,N',N'-Tetramethyl-1,3-propandiamin und N,N,N',N'-Tetraethyl-1,3-propandiamin offenbart. Die Diamine mit zwei tertiären Aminogruppen haben den Nachteil, dass die Absorption von CO₂ nur langsam erfolgt.

JP 2005-296897 beschreibt eine Absorption von CO₂ oder H₂S mit einem Absorptionsmedium, das ein Alkanolamin oder eine Aminosäure in Kombination mit einem Diamin oder Triamin enthält. Explizit offenbart ist die Kombination von 2-Ethylaminoethanol mit N,N'-Dimethyl-1,3-propandiamin.

WO 2010/012883 beschreibt eine Absorption von CO₂ aus Gasströmen mit einer wässrigen Lösung von
N,N,N',N'-Tetramethyl-1,6-hexandiamin. Um eine Phasentrennung in zwei flüssige Phasen während der Absorption zu vermeiden muss dem Absorptionsmedium zusätzlich noch ein primäres oder sekundäres Amin zugesetzt werden.

WO 2011/009195 beschreibt eine Absorption von CO₂ oder H₂S mit einer wässrigen Lösung eines Polyamins, das bevorzugt eine sekundäre Aminogruppe enthält. Explizit offenbart sind unter anderem 1,3-Propandiamin, N,N'-Dimethyl-1,3-propandiamin und N,N'-Diisopropyl-1,3-propandiamin.

WO 2011/080405 beschreibt eine Absorption von CO₂ aus Gasströmen mit wässrigen Lösungen von Diaminen der Formel R¹R²N(CR⁴R⁵)(CR⁶R⁷)ₐNHR³ wobei R¹, R² unabhängig voneinander ein C₁-C₁₂-Alkylrest oder ein C₁-C₁₂-Alkoxyalkylrest sein können, R³ bis R⁷ unabhängig voneinander Wasserstoff, ein C₁-C₁₂-Alkylrest oder ein C₁-C₁₂-Alkoxyalkylrest sein können, a = 1 bis 11 ist und R³ von R¹ und R² verschieden ist. Für a = 2 sind explizit die Diamine [N,N-Dimethyl-N'-(2-butyl)]-1,3-propandiamin, [N,N-Dimethyl-N'-butyl]-1,3-propandiamin, [N,N-Dimethyl-N'-(methyl-2-propyl)]-1,3-propandiamin und [N,N-Dimethyl-N'-tert-butyl]-1,3-propandiamin offenbart.

WO 2012/007084 beschreibt eine Absorption von CO₂ aus Gasströmen mit wässrigen Lösungen von N-Isopropyl-1,3-propandiamin. Die Lösungen können zusätzlich zu N-Isopropyl-1,3-propandiamin noch tertiäre Amine oder Alkyldiamine enthalten, wobei als tertiäre Amine unter anderem N,N,N',N'-Tetramethyl-1,3-propandiamin und N,N,N',N'-Tetraethyl-1,3-propandiamin genannt sind und als Alkyldiamine unter anderem 2,2,N,N-Tetramethyl-1,3-propandiamin und N,N'-Dimethyl-1,3-propandiamin genannt sind.

WO 2005/087349, EP0080817 und WO2011/082809 beschreiben jeweils die Absorption von Kohlendioxid aus einem Gas unter Verwendung einer wässrigen Aminlösung.

Die aus dem Stand der Technik bekannten Diamine weisen allerdings in der Regel bei Absorption von CO₂ entweder eine unbefriedigende Kapazität oder eine unbefriedigende Geschwindigkeit der Absorption auf. Außerdem tritt häufig bei höheren Temperaturen eine Phasentrennung des Absorptionsmediums in zwei flüssige Phasen auf, die zu Störungen beim Betrieb von Absorber und Desorber führen kann.

Es wurde nun gefunden, dass mit einem Absorptionsmedium, das Wasser und ein N,N,N'-Trialkyl-1,3-propandiamin mit nicht mehr als 8 Kohlenstoffatomen umfasst, bei der Absorption von CO₂ sowohl eine hohe gewichtsbezogene Kapazität als auch eine ausreichende Geschwindigkeit der Absorption erreicht werden kann und eine Phasentrennung in zwei flüssige Phasen im Desorber vermieden werden kann. Gegenstand der Erfindung ist deshalb ein Verfahren zur Absorption von CO₂ aus einer Gasmischung durch in Kontakt bringen der Gasmischung mit einem Absorptionsmedium, das Wasser und mindestens ein Amin der Formel (I)

(I) R¹R²NCH₂CH₂CHR⁴NHR³

umfasst, worin R¹, R² und R³ unabhängig voneinander C₁-C₃-Alkylreste sind, R⁴ Wasserstoff, Methyl oder Ethyl ist und die Reste R¹, R², R³ und R⁴ zusammen nicht mehr als 5 Kohlenstoffatome umfassen.

Die im erfindungsgemäßen Verfahren verwendeten Amine der Formel (I) sind Diamine mit einer sekundären und einer tertiären Aminogruppe, bei denen die Stickstoffatome durch eine Kette aus 3 Kohlenstoffatomen voneinander getrennt sind. Die Diamine weisen insgesamt maximal 8 Kohlenstoffatome auf, d.h. in Formel (I) umfassen die Reste R¹, R², R³ und R⁴ zusammen nicht mehr als 5
Kohlenstoffatome.

Das zur sekundären Aminogruppe benachbarte Kohlenstoffatom der Kette kann durch eine Methylgruppe oder eine Ethylgruppe substituiert sein, ist jedoch vorzugsweise unsubstituiert, d.h. in Formel (I) kann R⁴ Wasserstoff, Methyl oder Ethyl sein, wobei R⁴ vorzugsweise Wasserstoff ist.

Vorzugsweise ist die tertiäre Aminogruppe mit Methylgruppen oder Ethylgruppen substituiert, d.h. in Formel (I) sind R¹ und R² unabhängig voneinander Methyl oder Ethyl. Besonders bevorzugt ist die tertiäre Aminogruppe mit zwei Methylgruppen substituiert, d.h. in Formel (I) sind R¹ und R² Methyl. Am meisten bevorzugt ist die tertiäre Aminogruppe mit zwei Methylgruppen substituiert und die sekundäre Aminogruppe mit einer n-Propylgruppe oder einer Isopropylgruppe substituiert, d.h. in Formel (I) sind R¹ und R² Methyl und R³ ist n-Propyl oder Isopropyl, wobei Isopropyl bevorzugt ist.

Als Amine der Formel (I) eignen sich N1,N1,N3-Trimethyl-1,3-propandiamin, N3-Ethyl-N1,N1-dimethyl-1,3-propandiamin, N1,N1-Dimethyl-N3-propyl-1,3-propandiamin, N1,N1-Dimethyl-N3-(1-methylethyl)-1,3-propandiamin, N1-Ethyl-N1,N3-dimethyl-1,3-propandiamin, N1,N3-Diethyl-N1-methyl-1,3-propandiamin, N1,N1-Diethyl-N3-methyl-1,3-propandiamin, N1,N3-Dimethyl-N1-propyl-1,3-propandiamin, N1,N3-Dimethyl-N1-(1-methylethyl)-1,3-propandiamin, N1,N1,N3-Trimethyl-1,3-butandiamin, N3-Ethyl-N1,N1-dimethyl-1,3-butandiamin, N1-Ethyl-N1,N3-dimethyl-1,3-butandiamin und N1,N1,N3-Trimethyl-1,3-pentandiamin. Bevorzugt sind N1,N1,N3-Trimethyl-1,3-propandiamin, N3-Ethyl-N1,N1-dimethyl-1,3-propandiamin, N1,N1-Dimethyl-N3-propyl-1,3-propandiamin, N1,N1-Dimethyl-N3-(1-methylethyl)-1,3-propandiamin, N1-Ethyl-N1,N3-dimethyl-1,3-propandiamin, N1,N3-Diethyl-N1-methyl-1,3-propandiamin, N1,N1-Diethyl-N3-methyl-1,3-propandiamin, N1,N3-Dimethyl-N1-propyl-1,3-propandiamin und N1,N3-Dimethyl-N1-(1-methylethyl)-1,3-propandiamin. Weiter bevorzugt sind N1,N1,N3-Trimethyl-1,3-propandiamin, N3-Ethyl-N1,N1-dimethyl-1,3-propandiamin, N1,N1-Dimethyl-N3-propyl-1,3-propandiamin, N1,N1-Dimethyl-N3-(1-methylethyl)-1,3-propandiamin, N1-Ethyl-N1,N3-dimethyl-1,3-propandiamin, N1,N3-Diethyl-N1-methyl-1,3-propandiamin und N1,N1-Diethyl-N3-methyl-1,3-propandiamin. Noch weiter bevorzugt sind N1,N1,N3-Trimethyl-1,3-propandiamin, N3-Ethyl-N1,N1-dimethyl-1,3-propandiamin, N1,N1-Dimethyl-N3-propyl-1,3-propandiamin und N1,N1-Dimethyl-N3-(1-methylethyl)-1,3-propandiamin. Am meisten bevorzugt sind N1,N1-Dimethyl-N3-propyl-1,3-propandiamin und N1,N1-Dimethyl-N3-(1-methylethyl)-1,3-propandiamin, insbesondere N1,N1-Dimethyl-N3-(1-methylethyl)-1,3-propandiamin.

Amine der Formel (I) lassen sich nach bekannten Verfahren herstellen. Eine generell anwendbare Syntheseroute zur Herstellung von Aminen der Formel (I) ist die Addition eines sekundären Amins R¹R²NH an die CC-Doppelbindung von Acrolein, Methylvinylketon oder Ethylvinylketon und anschließende reduktive Aminierung des Additionsprodukts mit einem primären Amin R³NH₂ und Wasserstoff. Amine der Formel (I) mit R⁴ = H lassen sich durch Addition eines sekundären Amins R¹R²NH an die CC-Doppelbindung von Acrylnitril, anschließende Reduktion des Nitrils zum primären Amin und nachfolgende reduktive Aminierung der primären Aminogruppe mit Formaldehyd, Acetaldehyd, Propionaldehyd oder Aceton herstellen. Alternativ können Amine der Formel (I) mit R⁴ = H auch durch Addition eines sekundäres Amins R¹R²NH an die CC-Doppelbindung eines Acrylamids, dessen Stickstoffatom mit dem Rest R³ substituiert ist, und Hydrierung des resultierenden Additionsprodukts erhalten werden.

Das im erfindungsgemäßen Verfahren verwendete Arbeitsmedium umfasst Wasser und mindestens ein Amin der Formel (I). Der Gehalt an Aminen der Formel (I) im Absorptionsmedium beträgt vorzugsweise 10 bis 60 Gew.-%, besonders bevorzugt 20 bis 50 Gew.-%. Der Gehalt an Wasser im Absorptionsmedium beträgt vorzugsweise 40 bis 80 Gew.-%.

Das Absorptionsmedium kann zusätzlich zu Wasser und Aminen der Formel (I) noch mindestens ein sterisch ungehindertes primäres oder sekundäres Amin als Aktivator enthalten, wobei als Aktivator keine Amine der Formel (I) verwendet werden. Ein sterisch ungehindertes primäres Amin im Sinne der Erfindung ist ein primäres Amin, bei dem die Aminogruppe an ein Kohlenstoffatom gebunden ist, an das mindestens ein Wasserstoffatom gebunden ist. Ein sterisch ungehindertes sekundäres Amin im Sinne der Erfindung ist ein sekundäres Amin, bei dem die Aminogruppe an Kohlenstoffatome gebunden ist, an die jeweils mindestens zwei Wasserstoffatome gebunden sind. Der Gehalt an sterisch ungehinderten primären oder sekundären Aminen beträgt vorzugsweise 0,1 bis 10 Gew.-%, besonders bevorzugt 0,5 bis 8 Gew.-%. Als Aktivator eignen sich aus dem Stand der Technik bekannte Aktivatoren, wie zum Beispiel Ethanolamin, Piperazin und 3-(Methylamino)-propylamin. Der Zusatz eines Aktivators führt zu einer Beschleunigung der Absorption von CO₂ aus der Gasmischung, ohne dass Absorptionskapazität verloren geht.

Das Absorptionsmedium kann zusätzlich zu Wasser und Aminen noch ein oder mehrere physikalische Lösungsmittel enthalten. Der Anteil an physikalischen Lösungsmitteln kann dabei bis zu 50 Gew.-% betragen. Als physikalische Lösungsmittel eignen sich Sulfolan, aliphatische Säureamide, wie N-Formylmorpholin, N-Acetylmorpholin, N-Alkylpyrrolidone, insbesondere N-Methyl-2-pyrrolidon, oder N-Alkylpiperidone, sowie Diethylenglykol, Triethylenglykol und Polyethylenglykole und deren Alkylether, insbesondere Diethylenglykolmonobutylether. Vorzugsweise enthält das Absorptionsmedium jedoch kein physikalisches Lösungsmittel.

Das Absorptionsmedium kann zusätzlich noch Additive, wie Korrosionsinhibitoren, benetzungsfördernde Additive und Entschäumer aufweisen.

Als Korrosionsinhibitoren können im Absorptionsmedium alle Stoffe verwendet werden, die dem Fachmann zur Absorption von CO₂ unter Verwendung von Alkanolaminen als geeignete Korrosionsinhibitoren bekannt sind, insbesondere die in US 4,714,597 beschriebenen Korrosionsinhibitoren.

Als benetzungsförderndes Additiv werden vorzugsweise die aus WO 2010/089257 Seite 11, Zeile 18 bis Seite 13, Zeile 7 bekannten nichtionischen Tenside, zwitterionischen Tenside und kationischen Tenside verwendet.

Als Entschäumer können im Absorptionsmedium alle Stoffe verwendet werden, die dem Fachmann zur Absorption von CO₂ unter Verwendung von Alkanolaminen als geeignete Entschäumer bekannt sind.

Im erfindungsgemäßen Verfahren kann die Gasmischung ein Erdgas, ein Methan enthaltendes Biogas aus einer Fermentation, Kompostierung oder Kläranlage, ein Verbrennungsabgas, ein Abgas aus einer Kalzinierungsreaktion, wie dem Brennen von Kalk oder der Herstellung von Zement, ein Restgas aus einem Hochofenprozess zur Eisenherstellung oder eine aus einer chemischen Umsetzung resultierende Gasmischung, wie beispielsweise ein Kohlenmonoxid und Wasserstoff enthaltendes Synthesegas oder ein Reaktionsgas einer Wasserstoffherstellung durch Dampfreformieren sein. Vorzugsweise ist die Gasmischung ein Verbrennungsabgas, ein Erdgas oder ein Biogas, besonders bevorzugt ein Verbrennungsabgas, zum Beispiel aus einem Kraftwerk.

Die Gasmischung kann zusätzlich zu CO₂ noch weitere saure Gase enthalten, wie beispielsweise COS, H₂S, CH₃SH oder SO₂.
In einer bevorzugten Ausführungsform enthält die Gasmischung zusätzlich zu CO₂ noch H₂S. Ein Verbrennungsabgas wird vorzugsweise vorher entschwefelt, d.h. SO₂ wird aus der Gasmischung mit einem aus dem Stand der Technik bekannten Entschwefelungsverfahren, vorzugsweise durch eine Gaswäsche mit Kalkmilch, entfernt, bevor das erfindungsgemäße Absorptionsverfahren durchgeführt wird.

Die Gasmischung weist vor dem in Kontakt bringen mit dem Absorptionsmedium vorzugsweise einen Gehalt an CO₂ im Bereich von 0,1 bis 50 Vol-% auf, besonders bevorzugt im Bereich von 1 bis 20 Vol-% und am meisten bevorzugt im Bereich von 10 bis 20 Vol-%.

Die Gasmischung kann zusätzlich zu CO₂ noch Sauerstoff enthalten, vorzugsweise mit einem Anteil von 0,1 bis 25 Vol-% und besonders bevorzugt mit einem Anteil von 0,1 bis 10 Vol-%.

Für das erfindungsgemäße Verfahren können alle zum in Kontakt bringen einer Gasphase mit einer Flüssigphase geeigneten Apparate verwendet werden, um die Gasmischung mit dem Absorptionsmedium in Kontakt zu bringen. Vorzugsweise werden aus dem Stand der Technik bekannte Gaswäscher oder Absorptionskolonnen verwendet, beispielsweise Membrankontaktoren, Radialstromwäscher, Strahlwäscher, Venturi-Wäscher, Rotations-Sprühwäscher Füllkörperkolonnen, Packungskolonnen oder Bodenkolonnen. Besonders bevorzugt werden Absorptionskolonnen im Gegenstrombetrieb verwendet.

Im erfindungsgemäßen Verfahren wird die Absorption von CO₂ vorzugsweise bei einer Temperatur des Absorptionsmediums im Bereich von 0 bis 80°C, besonders bevorzugt 20 bis 70°C, durchgeführt. Bei Verwendung einer Absorptionskolonne im Gegenstrombetrieb beträgt die Temperatur des Absorptionsmediums besonders bevorzugt 30 bis 60°C beim Eintritt in die Kolonne und 35 bis 70°C beim Austritt aus der Kolonne.

Vorzugsweise wird die CO₂ enthaltende Gasmischung bei einem anfänglichen Partialdruck von CO₂ von 0,01 bis 4 bar mit dem Absorptionsmedium in Kontakt gebracht. Besonders bevorzugt beträgt der anfängliche Partialdruck von CO₂ in der Gasmischung von 0,05 bis 3 bar. Der Gesamtdruck der Gasmischung liegt vorzugsweise im Bereich von 0,8 bis 50 bar, besonders bevorzugt 0,9 bis 30 bar.

In einer bevorzugten Ausführungsform des erfindungsgemäßen Verfahrens wird im Absorptionsmedium absorbiertes CO₂ durch Erhöhen der Temperatur und/oder Verringern des Drucks wieder desorbiert und das Absorptionsmedium nach dieser Desorption von CO₂ wieder zur Absorption von CO₂ verwendet. Vorzugsweise erfolgt die Desorption durch Erhöhen der Temperatur. Durch einen solchen zyklischen Prozess aus Absorption und Desorption kann CO₂ aus der Gasmischung ganz oder teilweise abgetrennt und getrennt von anderen Komponenten der Gasmischung erhalten werden.

Alternativ zum Erhöhen der Temperatur oder dem Verringern des Drucks oder zusätzlich zu einer Temperaturerhöhung und/oder Druckverringerung kann auch eine Desorption durch Strippen des mit CO₂ beladenen Absorptionsmediums mit einem inerten Gas, wie zum Beispiel Stickstoff oder Wasserdampf, durchgeführt werden.

Wenn bei der Desorption von CO₂ zusätzlich auch Wasser aus dem Absorptionsmedium entfernt wird, kann dem Absorptionsmedium vor der Wiederverwendung zur Absorption gegebenenfalls noch Wasser zugesetzt werden.

Für die Desorption können alle Apparate verwendet werden, die aus dem Stand der Technik zur Desorption eines Gases aus einer Flüssigkeit bekannt sind. Vorzugsweise wird die Desorption in einer Desorptionskolonne durchgeführt. Alternativ kann die Desorption von CO₂ auch in einer oder mehreren Flash-Verdampfungsstufen durchgeführt werden.

Die Desorption wird vorzugsweise bei einer Temperatur im Bereich von 50 bis 200°C durchgeführt. Bei einer Desorption durch Erhöhen der Temperatur wird die Desorption von CO₂ vorzugsweise bei einer Temperatur des Absorptionsmediums im Bereich von 50 bis 180°C, besonders bevorzugt 80 bis 150°C, durchgeführt. Die Temperatur bei der Desorption liegt dabei vorzugsweise mindestens 20°C, besonders bevorzugt mindestens 30°C, oberhalb der Temperatur bei der Absorption. Bevorzugt wird bei einer Desorption durch Erhöhen der Temperatur ein Strippen mit Wasserdampf, der durch Verdampfen eines Teils des Absorptionsmediums erzeugt wird, durchgeführt.

Bei einer Desorption durch Verringern des Drucks wird die Desorption vorzugsweise bei einem Druck im Bereich von 0,01 bis 10 bar durchgeführt.

Da das im erfindungsgemäßen Verfahren verwendete Absorptionsmedium eine hohe Absorptionskapazität für CO₂ aufweist und im erfindungsgemäßen Verfahren als homogene einphasige Lösung vorliegt, kann das erfindungsgemäße Verfahren in einfach aufgebauten Anlagen eingesetzt werden und erreicht dabei eine im Vergleich zu den aus dem Stand der Technik bekannten Aminen verbesserte Absorptionsleistung für CO₂. Gleichzeitig wird im Vergleich zu Ethanolamin wesentlich weniger Energie zur Desorption von CO₂ benötigt.

In einer bevorzugten Ausführungsform des erfindungsgemäßen Verfahrens erfolgt die Desorption durch Strippen mit einem Inertgas, vorzugsweise Wasserdampf, in einer Desorptionskolonne. Das Strippen in der Desorptionskolonne erfolgt vorzugsweise bei einer Temperatur des Absorptionsmediums im Bereich von 90 bis 130°C. Durch das Strippen kann mit geringem Energiebedarf ein niedriger Restgehalt des Absorptionsmediums an CO₂ nach Desorption erreicht werden.

Die nachfolgenden Beispiele verdeutlichen die Erfindung, ohne jedoch den Gegenstand der Erfindung zu beschränken.

### Beispiele

### Beispiel 1

Herstellung von N3-Ethyl-N1,N1-dimethyl-1,3-propandiamin In einem Autoklav wurden 185 g (2,10 mol) 50 Gew.-% Acetaldehyd in Methanol vorgelegt und 4,80 g (2,00 mmol) Palladium 10 Gew.-% auf Aktivkohle (wasserfeucht), 100 ml Methanol und 206 g (2,00 mol) N1,N1-Dimethyl-1,3-propandiamin zugegeben. Der Autoklav wurde verschlossen und die Mischung wurde 5 h bei 40 bis 100 °C und 20 bis 40 bar Wasserstoffdruck hydriert. Anschließend wurde der Katalysator abfiltriert und die Reaktionsmischung fraktioniert destilliert. Es wurden 71,3 g (0,548 mol, 27,3 %) N3-Ethyl-N1,N1-dimethyl-1,3-propandiamin als farblose Flüssigkeit erhalten.

### Beispiel 2

### Herstellung von N1,N1,N3-Trimethyl-1,3-butandiamin

In einem Autoklav wurden 180 g (1,50 mol) N,N-Dimethyl-4-amino-2-butanon und 50 g Ethanol vorgelegt und 3,60 g (1,50 mmol) Palladium 10 Gew.-% auf Aktivkohle (wasserfeucht), 40 g Ethanol und 148 g (1,57 mol) 33 Gew.-% Methylamin in Ethanol zugegeben. Der Autoklav wurde verschlossen und die Mischung wurde 9 h bei 40 °C und 20 bis 40 bar Wasserstoffdruck hydriert. Anschließend wurde der Katalysator abfiltriert und die Reaktionsmischung fraktioniert destilliert. Es wurden 56,5 g (0,433 mol, 28,9 %) N1,N1,N3-Trimethyl-1,3-butandiamin als farblose Flüssigkeit erhalten.

### Beispiel 3

### Herstellung von N1,N1-Dimethyl-N3-propyl-1,3-propandiamin

In einem Autoklav wurden 130 g (2,20 mol) Propionaldehyd und 40 ml Methanol vorgelegt und 4,80 g (2,00 mmol) Palladium 10 Gew.-% auf Aktivkohle (wasserfeucht), 50 ml Methanol und 206 g (2,00 mol) N1,N1-Dimethyl-1,3-propandiamin zugegeben. Der Autoklav wurde verschlossen und die Mischung wurde 6 h bei 40 bis 120 °C und 20 bis 40 bar Wasserstoffdruck hydriert. Anschließend wurde der Katalysator abfiltriert und die Reaktionsmischung fraktioniert destilliert. Es wurden 108 g (0,749 mol,
37,5 %) N1,N1-Dimethyl-N3-propyl-1,3-propandiamin als farblose Flüssigkeit erhalten.

### Beispiel 4

### Herstellung von N1,N1-Dimethyl-N3-(1-methylethyl)-1,3-propandiamin

In einem Autoklav wurden 139 g (2,40 mol) Aceton vorgelegt 4,80 g (2,00 mmol) Palladium 10 Gew.-% auf Aktivkohle (wasserfeucht), 90 ml Methanol und 206 g (2,00 mol) N1,N1-Dimethyl-1,3-propandiamin zugegeben. Der Autoklav wurde verschlossen und die Mischung wurde 6 h bei 40 bis 120 °C und 20 bis 40 bar Wasserstoffdruck hydriert. Anschließend wurde der Katalysator abfiltriert und die Reaktionsmischung fraktioniert destilliert. Es wurden 222 g (1,54 mol, 76,8 %) N1,N1-Dimethyl-N3-(1-methylethyl)-1,3-propandiamin als farblose Flüssigkeit erhalten.

### Beispiele 5 bis 17

### Bestimmung der Absorptionskapazität für CO₂ und der Entmischungstemperatur

Zur Bestimmung der CO₂-Beladung und des CO₂-Hubs wurden 150 g Absorptionsmedium aus 30 Gew.-% Amin und 70 Gew.-% Wasser in einem thermostatisierbaren Behälter mit aufgesetztem und auf 3°C gekühltem Rückflusskühler vorgelegt. Nach Aufheizen auf 40°C bzw. 100°C wurde über eine Fritte am Behälterboden eine Gasmischung aus 14 Vol-% CO₂, 80 Vol-% Stickstoff und 6 Vol-% Sauerstoff mit einer Flussrate von 59 1/h durch das Absorptionsmedium geleitet und die CO₂-Konzentration im aus dem Rückflusskühler austretenden Gasstrom über die IR-Absorption mit einem CO₂-Analysator bestimmt. Durch Integration der Differenz des CO₂-Gehalts im eingeleiteten Gasstrom und im austretenden Gasstrom wurde die aufgenommene CO₂-Menge ermittelt und die Gleichgewichtsbeladung des Absorptionsmediums mit CO₂ berechnet. Der CO₂-Hub wurde als Differenz der bei 40°C und 100°C aufgenommenen CO₂-Mengen berechnet. Die so bestimmten Gleichgewichtsbeladungen bei 40 und 100°C in mol CO₂ / mol Amin und der CO₂-Hub in mol CO₂ / kg Absorptionsmedium sind in Tabelle 1 angeführt.

Zur Bestimmung der Entmischungstemperatur wurde CO₂-freies Absorptionsmedium aus 30 Gew.-% Amin und 70 Gew.-% Wasser in einem verschlossenen Glasbehälter stufenweise um jeweils 10 °C bis auf 90 °C erhitzt und die Temperatur ermittelt, bei der eine Trübung oder Trennung in zwei flüssige Phasen erkennbar war.

Die Beispiele 5 bis 17 zeigen, dass mit Aminen der Formel (I) eine hohe gewichtsbezogene Kapazität des Absorptionsmediums für die Absorption von CO₂ erreicht wird, wobei durch die hohe Entmischungstemperatur eine Entmischung des Absorptionsmediums sowohl bei der Absorption als auch bei der Desorption von CO₂ vermieden werden kann. Bei den aus WO 2011/080405 bekannten Aminen der Beispiele 8 und 9 kann es dagegen wegen der niedrigeren Entmischungstemperatur zu einer Entmischung des Absorptionsmediums kommen.

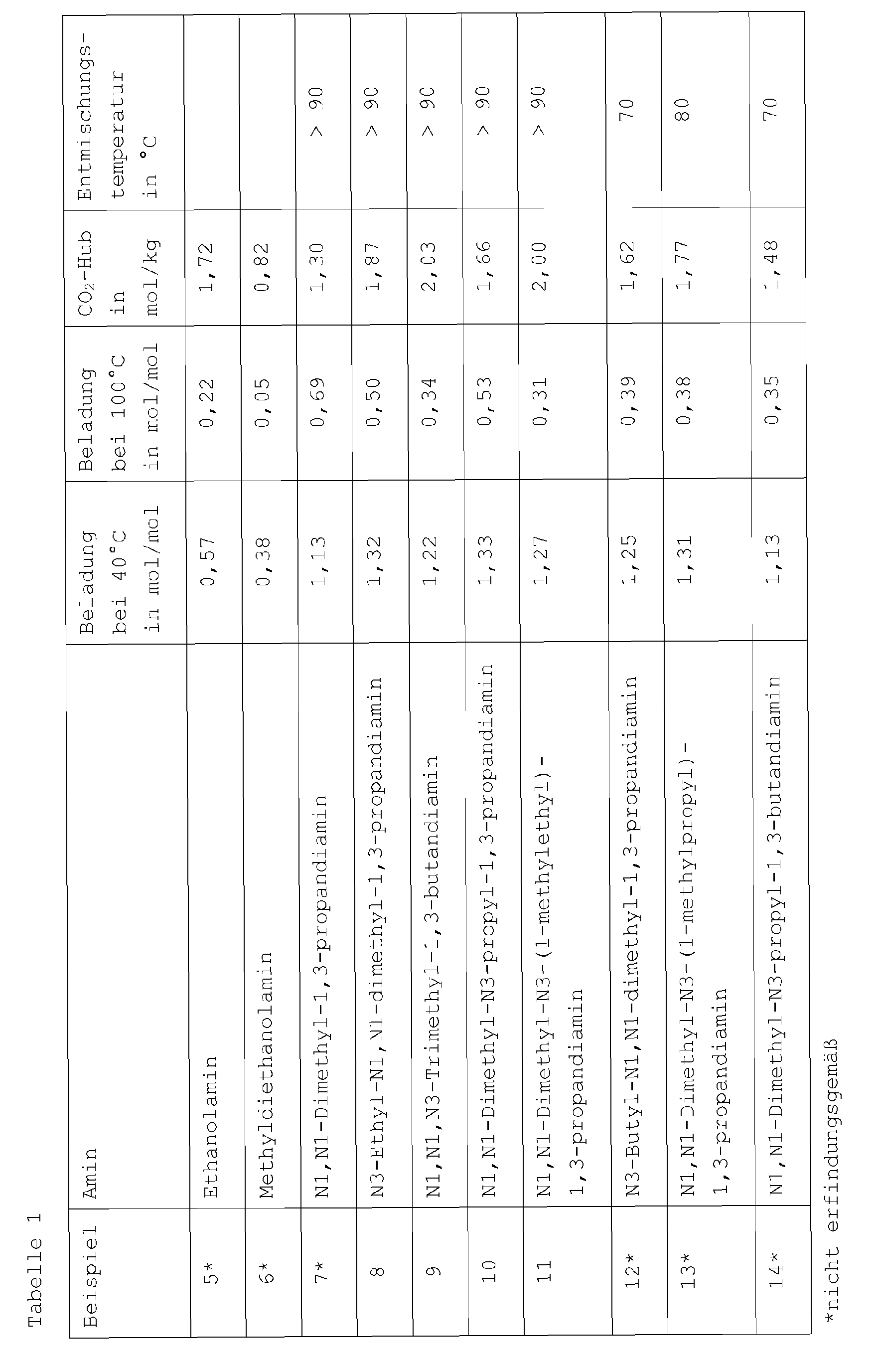

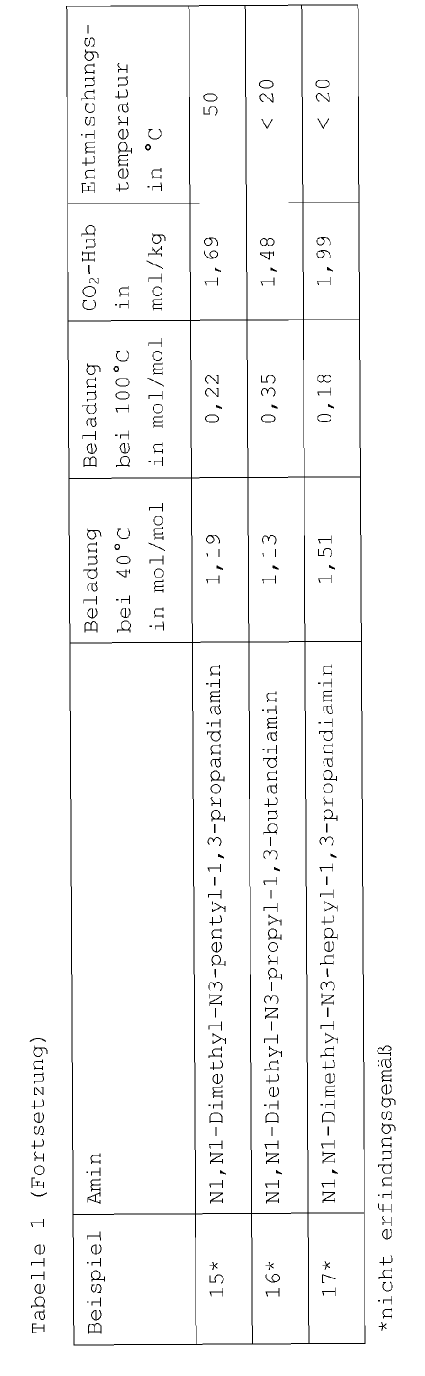

## Patentansprüche

1. Verfahren zur Absorption von CO₂ aus einer Gasmischung durch in Kontakt bringen der Gasmischung mit einem Absorptionsmedium, **dadurch gekennzeichnet, dass** das Absorptionsmedium Wasser und mindestens ein Amin der Formel (I)
(I) R¹R²NCH₂CH₂CHR⁴NHR³
umfasst, worin R¹, R² und R³ unabhängig voneinander C₁-C₃-Alkylreste sind, R⁴ Wasserstoff, Methyl oder Ethyl ist und die Reste R¹, R²,R³ und R⁴ zusammen nicht mehr als 5 Kohlenstoffatome umfassen.

2. Verfahren nach Anspruch 1, **dadurch gekennzeichnet, dass** in Formel (I) R⁴ Wasserstoff ist.

3. Verfahren nach Anspruch 2, **dadurch gekennzeichnet, dass** in Formel (I) R¹ und R² unabhängig voneinander Methyl oder Ethyl sind.

4. Verfahren nach Anspruch 3, **dadurch gekennzeichnet, dass** in Formel (I) R¹ und R² Methyl sind.

5. Verfahren nach Anspruch 4, **dadurch gekennzeichnet, dass** in Formel (I) R³ n-Propyl oder Isopropyl ist.

6. Verfahren nach einem der Ansprüche 1 bis 5, **dadurch gekennzeichnet, dass** der Gehalt an Aminen der Formel (I) im Absorptionsmedium 10 bis 60 Gew.-%, vorzugsweise 20 bis 50 Gew.-% beträgt.

7. Verfahren nach einem der Ansprüche 1 bis 6, **dadurch gekennzeichnet, dass** die Gasmischung ein Verbrennungsabgas, ein Erdgas oder ein Biogas ist.

8. Verfahren nach einem der Ansprüche 1 bis 7, **dadurch gekennzeichnet, dass** im Absorptionsmedium absorbiertes CO₂ durch Erhöhen der Temperatur und/oder Verringern des Drucks wieder desorbiert wird und das Absorptionsmedium nach dieser Desorption von CO₂ wieder zur Absorption von CO₂ verwendet wird.

9. Verfahren nach Anspruch 8, **dadurch gekennzeichnet, dass** die Absorption bei einer Temperatur im Bereich von 0 bis 80°C und die Desorption bei einer höheren Temperatur im Bereich von 50 bis 200°C durchgeführt wird.

10. Verfahren nach Anspruch 8 oder 9, **dadurch gekennzeichnet, dass** die Absorption bei einem Druck im Bereich von 0,8 bis 50 bar und die Desorption bei einem niedrigeren Druck im Bereich von 0,01 bis 10 bar durchgeführt wird.

## Claims

1. Method of absorbing CO₂ from a gas mixture by bringing the gas mixture into contact with an absorption medium, **characterized in that** the absorption medium comprises water and at least one amine of formula (I)
(I) R¹R²NCH₂CH₂CHR₄NHR³,
where R¹, R² and R³ are, independently of one another, C₁-C₃-alkyl radicals, R⁴ is hydrogen, methyl or ethyl and the radicals R¹, R², R³ and R⁴ together comprise not more than 5 carbon atoms.

2. Method according to Claim 1, **characterized in that** R⁴ in formula (I) is hydrogen.

3. Method according to Claim 2, **characterized in that** R¹ and R² in formula (I) are each, independently of one another, methyl or ethyl.

4. Method according to Claim 3, **characterized in that** R¹ and R² in formula (I) are each methyl.

5. Method according to Claim 4, **characterized in that** R³ in formula (I) is n-propyl or isopropyl.

6. Method according to any one of Claims 1 to 5, **characterized in that** the content of amines of formula (I) in the absorption medium is from 10 to 60% by weight, preferably from 20 to 50% by weight.

7. Method according to any one of Claims 1 to 6, **characterized in that** the gas mixture is a combustion off-gas, a natural gas or a biogas.

8. Method according to any one of Claims 1 to 7, **characterized in that** CO₂ absorbed in the absorption medium is desorbed again by increasing the temperature and/or reducing the pressure and the absorption medium after this desorption of CO₂ is used again for the absorption of CO₂.

9. Method according to Claim 8, **characterized in that** the absorption is carried out at a temperature in the range from 0 to 80°C and the desorption is carried out at a higher temperature in the range from 50 to 200°C.

10. Method according to Claim 8 or 9, **characterized in that** the absorption is carried out at a pressure in the range from 0.8 to 50 bar and the desorption is carried out at a lower pressure in the range from 0.01 to 10 bar.

## Revendications

1. Procédé d'absorption du CO₂ d'un mélange de gaz par mise en contact du mélange de gaz avec un milieu d'absorption, **caractérisé en ce que** le milieu d'absorption comprend de l'eau et au moins une amine de formule (I)
(I) R¹R²NCH²CH²CHR⁴NHR³
où R¹, R² et R³ sont, indépendamment les uns des autres, des résidus alkyles en C₁₋₃, R⁴ est un hydrogène, un méthyle ou un éthyle et les résidus R¹, R², R³ et R⁴ regroupent ensemble pas plus de 5 atomes de carbone.

2. Procédé selon la revendication 1, **caractérisé en ce que**, dans la formule (I), R⁴ est un hydrogène.

3. Procédé selon la revendication 2, **caractérisé en ce que**, dans la formule (I), R¹ et R² sont, indépendamment l'un de l'autre, un méthyle ou un éthyle.

4. Procédé selon la revendication 3, **caractérisé en ce que**, dans la formule (I), R¹ et R² sont des méthyles.

5. Procédé selon la revendication 4, **caractérisé en ce que**, dans la formule (I), R³ est un n-propyle ou un isopropyle.

6. Procédé selon l'une quelconque des revendications 1 à 5, **caractérisé en ce que** la teneur en amines de la formule (I) dans le milieu d'absorption est située entre 10 et 60 % en poids, de préférence entre 20 et 50 % en poids.

7. Procédé selon l'une quelconque des revendications 1 à 6, **caractérisé en ce que** le mélange de gaz est un gaz d'échappement de combustion, un gaz naturel ou un biogaz.

8. Procédé selon l'une quelconque des revendications 1 à 7, **caractérisé en ce que**, dans le milieu d'absorption, le CO₂ absorbé est relargué par augmentation de la température et/ou réduction de la pression, et le milieu d'absorption, après cette désorption de CO₂, est réutilisé pour absorber du CO₂.

9. Procédé selon la revendication 8, **caractérisé en ce que** l'absorption est effectuée à une température entre 0 et 80°C, et la désorption est effectuée à une température plus élevée, entre 50 et 200°C.

10. Procédé selon la revendication 8 ou 9, **caractérisé en ce que** l'absorption est effectuée sous une pression entre 0,8 et 50 bar, et la désorption est effectuée à une pression plus basse, entre 0,01 et 10 bar.
